# EUROPEAN PATENT SPECIFICATION

(11) **EP 0 408 901 B1**
(45) Date of publication and mention of the grant of the patent: **24.04.1996**
(21) Application number: 90111366.2
(22) Date of filing: 15.06.1990
(51) Int. Cl.: C08J 9/16

(54) **Process for the preparation of expandable beads**
Verfahren zur Herstellung von expandierbaren Perlen
Procédé de préparation de perles expansibles

(30) Priority: 05.07.1989 IT 2109289
(43) Date of publication of application: 23.01.1991
(73) Proprietor: ENICHEM S.p.A., I-20124 Milano (IT)
(72) Inventor: Anfuso, Francesco, I-46100 Mantova (IT); Mattiussi, Andrea, I-20149 Milano (IT); Matarrese, Savino, Verona (IT); Borghi, Italo, Ferrara (IT)
(74) Representative: Weinhold, Peter, Dr.

(56) References cited:
- EP-A- 0 294 783
- EP-A- 0 383 133

## Description

The present invention relates to a process for the preparation of expandable beads.

Particularly, the present invention relates to a process for the preparation of expandable beads constituted by blends of polyphenylene ether and vinyl-aromatic polymer and containing an expanding agent.

As it is known, polyphenylene ether resins can be mixed with vinyl-aromatic polymers to form thermoplastic blends which are extrudable and moldable into molded articles having high thermal resistance, impact resistance, hydrolytic stability and dimensional stability.

These blends may also contain flame-retarding agents, reinforcing agents and various quantities and types of expanding agents.

The polyphenylene ether resins and the methods for their production are broadly described in the patent literature, e.g. in US-A-3,306,874, 3,306,875, 3,257,357, 3;257,358, 3,337,501 and 3,787,361. Blends of polyphenylene ethers with polymers of vinyl-aromatic monomers, including polystyrene, high impact polystyrene and co- and terpolymers of styrene, are described in US-A-3,383,435.

Foamable blends of polyphenylene ether and vinyl-aromatic polymers are also known. These blends are generally used to produce structural foams, using molds and techniques analogous to the injection molding process.

US-A-4,727,093 describes a process for the production of low density particles of blends of polyphenylene ethers and vinyl-aromatic polymers. Said process comprises incorporating into the already formed granules of the blend of polyphenylene ether and vinyl-aromatic polymer a liquid volatile expanding agent, such as a C₄-C₇ aliphatic hydrocarbon or C₁-C₂ fluorocarbon, which can be absorbed by the blend and vaporizes at a temperature lower than the glass transition temperature (Tg) of the blend. For this purpose, the granules - as such or, preferably, in aqueous suspension - are treated with the expanding agent in an atmosphere saturated with the expanding agent for a time sufficient to incorporate therein a quantity sufficient for obtaining the desired expansion.

After this treatment, the granules are subjected to an expansion process to obtain the low density product. The expansion process is effected by heating, preferably carried out with pressurized steam, to a temperature near the Tg of the blend.

These pocesses for the incorporation of the expanding agent cause various problems which influence both the appearance and the properties of the particles.

Particularly, said known processes result in an inhomogeneous absorption of the expanding agent by the particles, which after the expansion causes an imperfect cellular structure (glassy structure) and also an imperfect and unacceptable diffusion of the expanding agent into the blend. For this reason and because of the insufficient penetration of the expanding agent, the presence of cores inside the expanded particles is observed.

Moreover, the expandable particles obtained by this incorporation method generally require a relatively long maturation period for yielding a sufficient diffusion of the expanding agent before their preexpansion.

Additionally, the expandable particles obtained by this procedure only have a roughly spherical shape and their diameter is such that it is not possible to use them for the molding of manufactured articles of complex geometrical shape which nevertheless have a satisfactory superficial appearance.

It has now been found that all of the above problems can be overcome by adding the expanding agent at the beginning or during the polymerization of the vinyl-aromatic monomer in the presence of the polyphenylene ether.

Therefore, the present invention provides a process for the preparation of expandable beads constituted by blends of poly(phenylene-ether) and a vinyl-aromatic polymer and containing an expanding agent, which process comprising the steps of dissolving a poly(phenylene-ether) in a vinyl-aromatic monomer and in polymerizing the vinyl-aromatic monomer in the presence of the poly(phenylene-ether) characterized in that the polymerization of the vinyl-aromatic monomer is carried out by:
- prepolymerizing the vinyl-aromatic monomer, optionally in the presence of a peroxide initiator, to obtain a conversion of 10-45% by weight of polymerized vinyl-aromatic monomer;
- suspending this prepolymerized mass in water;
- adding the expanding agent having a boiling point below 100° C; and
- completing the polymerization in the aqueous suspension.

The concentration of polyphenylene ether in the solution generally ranges from 1 to 50% by weight, preferably 10 to 40% by weight, based on the total weight of the solution.

The polymerization of the vinyl-aromatic monomer in the presence of polyphenylene ether can be carried out in suspension, in bulk or in bulk-suspension according to known techniques as described , e.g. in US-A-3,384,682, 3,487,127 and 3,664,977 and in NL-A-66-17529.

Preferably, the vinyl-aromatic monomer is prepolymerized in bulk at a temperature of from about 110° to about 130° C.

The suspension of the prepolymerized mass in water is preferably prepared by using an organic or inorganic suspending system.

Examples of suitable organic and inorganic suspending agents include carboxymethyl cellulose, hydroxyethyl cellulose, methylcellulose, tricalcium phosphate and acrylic acid/2-ethyl-hexylacrylate copolymer.

Examples of suitable initiators are the organic peroxides such as dibenzoyl peroxide, dicaproyl peroxide, dilauroyl peroxide, tert-butylperbenzoate, di-tert-butyl peroxide, tert-butylperacetate and cyclohexanone peroxide.

Examples of suitable expanding agents are aliphatic hydrocarbons, individually or as mixtures, containing from 2 to 7 carbon atoms, such as butane, pentane, isopentane, hexane, heptane and cyclopentane, halogenated derivatives of aliphatic hydrocarbons containing from 1 to 2 carbon atoms, such as chloroform, methylene chloride and chlorofluoro carbons such as CCl₃F, CCl₂F₂, CHClF₂ and CClF₂-CClF₂, commercially known as Freon 11, Freon 12, Freon 22 and Freon 114.

Generally, the expanding agent is added in an amount of from 1 to 30% by weight, based on the polyphenylene ether/vinyl-aromatic material solution.

Besides the expanding agent other conventional additives can be added, such as flame-retarding agents, stabilizers, plasticizers, antioxidants, pigments, nucleating agents etc.

Although styrene is the preferred vinyl-aromatic monomer in the process of the present invention, other vinyl-aromatic monomers can also be used as monomeric starting material, both individually and in the form of mixtures. The term vinyl-aromatic monomer, as used in the present description, particularly denotes monomers of general formula (I): 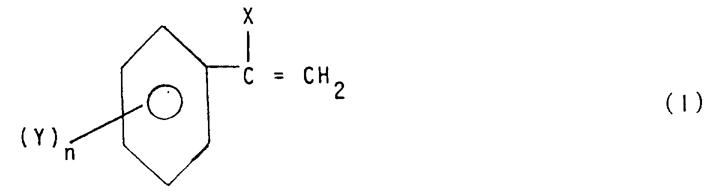 in which
X represents hydrogen or an alkyl radical having from 1 to 4 carbon atoms (e.g. methyl, ethyl and n- and i-propyl);
Y represents halogen (e.g. F, Cl, Br and I, preferably Cl and Br) or an alkyl radical having from 1 to 4 carbon atoms (methyl, ethyl, n- and i-propyl, etc.); and
n is 0 or an integer of from 1 to 5.

Examples of vinyl-aromatic monomers covered by general formula (I) are: methyl-styrene; mono- di-, tri-, tetra- and penta-chloro styrene and the corresponding alpha-methyl styrenes; mono- and di-bromo-styrene; styrenes alkylated in the nucleus and the corresponding alpha-methyl-styrenes, such as ortho- and para-methyl styrenes, ortho- and paraethyl styrenes; etc. These monomers can be used individually or mixed with each other and/or with styrene. They can also be copolymerized with other additives for the formation of impact resistant polymers modified with rubber. The rubber can be of the natural or synthetic kind, such as, for example, polybutadiene, polyisoprene, ethylene-propylene-copolymer (EPM); ethylene-propylenediene-terpolymer (EPDM), silicone rubbers or styrene(S)-butadiene(B) block rubbers of any kind, such as SB, SBS, SBSB etc.

The vinyl-aromatic monomer may also include, in quantities below 50% by weight, one or more other copolymerizable monomers such as acrylonitrile, methacrylonitrile, methylmethacrylate, maleic anhydride, methacrylic acid etc.

The polyphenylene ether used in the process of the present invention preferably has repeating units of formula (II):

[ -AR-O]ₙ (II)

in which AR is a bivalent aryl radical and n is an integer of from 10 to 1000. The bivalent aryl radical can optionally be substituted.

Particularly preferred polyphenylene ethers are those having repeating structural units of general formula (III): 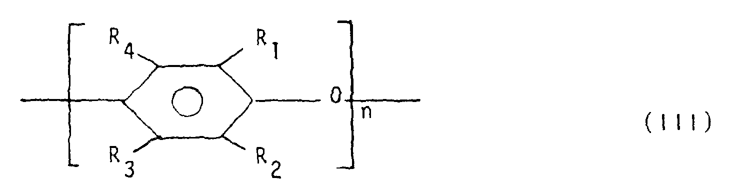 in which R₁, R₂, R₃, R₄, the same or different from one another, represent hydrogen, alkyl radicals containing from 1 to 10, particularly 1 to 5 carbon atoms, such as methyl, ethyl, propyl, butyl and pentyl, halogen (F, Cl, Br or I), particularly chlorine and bromine, and (preferably C₇₋₁₂-) aralkyl, (preferably C₇₋₁₂-) alkyl-aryl or (preferably C₆₋₁₂-) aryl radicals having from 6 to 20 carbon atoms and n is at least 50 and preferably ranges from 50 to 200.

Examples of suitable polyphenylene ethers include:
- poly(2,6-dimethyl-1,4-phenylene ether);
- poly(2-methyl-1,4-phenylene ether):
- poly(3-methyl-1,4-phenylene ether);
- poly(2,6-diethyl-1,4-phenylene ether);
- poly(2,6-dipropyl-1,4-phenylene ether);
- poly(2,6-dichloromethyl-1,4-phenylene ether);
- poly(2-methyl-6-allyl-1,4-phenylene ether);
- poly(2,6-dibromomethyl-1,4-phenylene ether);
- poly(2,6-dichloro-1,4-phenylene ether);
- poly(2,6-diphenyl-1,4-phenylene ether);
- poly(3,5-dimethyl-1,4-phenylene ether);
- poly(2,5-dimethyl-1,4-phenylene ether);
- poly(2,3,5-trimethyl-1,4-phenylene ether);
- poly(2,3,6-trimethyl-1,4-phenylene ether);
- poly(2,3,5,6-tetramethyl-phenylene ether);

The polyphenylene ethers can be obtained by means of known techniques, e.g. by oxidative coupling of phenolic compounds as described in the above-mentioned patent literature.

The following examples are given in order to illustrate the present invention without being a limitation of the scope thereof.

### EXAMPLE 1

Into a 5l-laboratory reactor were introduced:
- a solution composed of 20 parts of poly(2,6-dimethyl-1,4-phenylene ether) having an intrinsic viscosity of about 0.5 dl/g, as measured in chloroform at 25°C, produced by ENICHEM San Donato Milanese (Milano), and 100 parts by weight of styrene,
- 130 parts by weight of water;
- 0.6 parts by weight of tricalcium phosphate;
- 0.003 parts by weight of dodecyl-benzene sodium sulphonate;
- 0.6 parts by weight of tert-butyl perbenzoate; and
- 0.6 parts by weight of dibenzoyl peroxide.

The mixture was degassed with nitrogen for 30 minutes at 60°C and heated at 90°C under stirring.
The mixture was kept at this temperature for 6 hours. Then 0.4 parts by weight of tricalcium phosphate and 13 parts by weight of pentane were added and the temperature was raised to 120°C under pressure and maintained for a further 5 hours.
The reaction mixture was then cooled down to room temperature and the obtained beads were separated by filtration.
Expandable beads were obtained, which beads had a diameter of about 0.8 mm and contained abdut 7% of pentane.
After the expansion the beads showed a fine and homogeneous cellular structure and had a density of about 25 g/l.

### EXAMPLE 2

The process was carried out under the same conditions as described in example 1, but using:
- a solution composed of 40 parts by weight of poly(2,6-dimethyl-1,4-phenylene ether) of example 1 and 100 parts by weight of styrene;
- 0.9 parts by weight of tricalcium phosphate;
- 0.003 parts by weight of dodecyl-benzene sodium sulphonate;
- 0.8 parts by weight of dibenzoyl peroxide;
- 0.7 parts by weight of tert-butyl perbenzoate; and
- 130 parts by weight of demineralized water.

After heating at 90°C for six hours:
- 0.4 parts by weight of tricalcium phosphate and
- 15 parts by weight of pentane were added.

Also in this case expandable beads of about 0.8 - 0.9 mm of diameter and containing about 7% of pentane were finally obtained. After preexpansion the beads showed a fine and homogeneous cellular structure and a density of 25 g/l.

## Claims

1. A process for the preparation of expandable beads constituted by blends of poly(phenylene-ether) and a vinyl-aromatic polymer and containing an expanding agent, which process comprising the steps of dissolving a poly(phenylene-ether) in a vinyl-aromatic monomer and in polymerizing the vinyl-aromatic monomer in the presence of the poly(phenylene-ether), characterized in that the polymerization of the vinyl-aromatic monomer is carried out by:
- prepolymerizing the vinyl-aromatic monomer, optionally in the presence of a peroxide initiator, to obtain a conversion of 10-45% by weight of polymerized vinyl-aromatic monomer;
- suspending this prepolymerized mass in water;
- adding the expanding agent having a boiling point below 100°C; and
- completing the polymerization in the aqueous suspension.

2. Process according to claim 1,
wherein the prepolymerization step in bulk of the vinyl-aromatic monomer is carried out at a temperature of from 110°C to 130°C.

3. Process according to any one of the preceding claims, wherein the concentration of polyphenylene ether in the solution is from 1 to 50% by weight, preferably 10 to 40%, based on the solution.

4. Process according to any one of the preceding claims, wherein the concentration of expanding agent is from 1 to 30% by weight, based on the solution of polyphenylene ether and vinyl-aromatic monomer.

5. Process according to any one of the preceding claims, wherein the vinyl-aromatic monomer has the general formula (I): 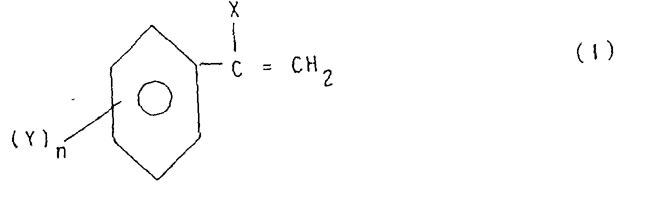 in which
X represents hydrogen or an alkyl radical having from 1 to 4 carbon atoms;
Y represents halogen or an alkyl radical having from 1 to 4 carbon atoms; and
n is 0 or an integer of from 1 to 5.

6. Process according to any one of the preceding claims, wherein the vinyl-aromatic monomer is polymerized in the presence of a rubber.

7. Process according to any one of the preceding claims, wherein the vinyl-aromatic monomer includes one or more copolymerizable monomers, particularly selected from acrylonitrile, methacrylonitrile, methyl methacrylate, maleic anhydride and methacrylic acid, in an amount of less than 50% by weight.

8. Process according to any one of the preceding claims, wherein the polyphenylene ether has the general formula (III): 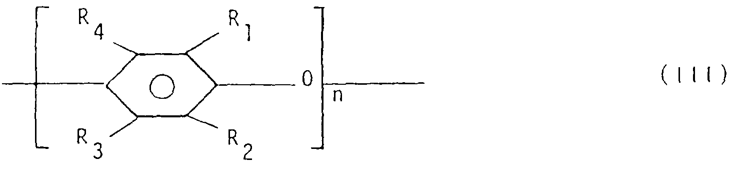 in which R₁, R₂, R₃, and R₄, the same or different from one another, represent hydrogen, alkyl radicals containing from 1 to 10 carbon atoms, particularly selected from methyl, ethyl, propyl, butyl and pentyl, halogen, particularly chlorine or bromine, and aralkyl, alkyl-aryl or aryl radicals having from 6 to 20 carbon atoms and n is at least 50 and preferably ranges from 50 to 200.

## Patentansprüche

1. Verfahren zur Herstellung expandierbarer Kugeln, die aus Mischungen von Poly(phenylenether) und einem vinylaromatischen Polymer bestehen und ein Expansionsmittel enthalten, wobei das Verfahren die Schritte umfaßt: Lösen eines Polyphenylenethers in einem vinylaromatischen Monomer und Polymerisieren des vinylaromatischen Monomers in Gegenwart des Polyphenylenethers, dadurch gekennzeichnet, daß die Polymerisation des vinylaromatischen Monomers durchgeführt wird, indem man:
- das vinylaromatische Monomer, gegebenenfalls in Gegenwart eines Peroxid-lnitiators, prepolymerisiert, um eine Umwandlung von 10 bis 45 Gew.-% des polymerisierten vinylaromatischen Monomers zu erhalten,
- die prepolymerisierte Masse in Wasser suspendiert,
- das Expansionsmittel mit einem Siedepunkt unter 100 °C zusetzt und
- die Polymerisation in der wäßrigen Suspension vollendet.

2. Verfahren gemäß Anspruch 1, worin der Prepolymerisationsschritt in Masse des vinylaromatischen Monomers bei einer Temperatur zwischen 110 °C und 130 °C durchgeführt wird.

3. Verfahren gemäß irgendeinem der vorhergehenden Ansprüche, worin die Konzentration des Polyphenylenethers in der Lösung zwischen 1 und 50 Gew.-%, vorzugsweise 10 und 40 Gew.-%, bezogen auf die Lösung, beträgt.

4. Verfahren gemäß irgendeinem der vorhergehenden Ansprüche, worin die Konzentration des Expansionsmittels zwischen 1 und 30 Gew.-%, bezogen auf die Lösung von Polyphenylenether und vinylaromatischem Monomer, beträgt.

5. Verfahren gemäß irgendeinem der vorhergehenden Ansprüche, worin das vinylaromatische Monomer die allgemeine Formel (I) besitzt 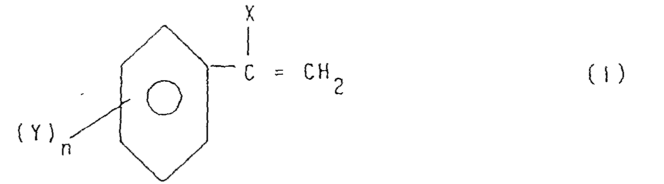 in der X Wasserstoff oder einen Alkylrest mit 1 bis 4 Kohlenstoffatomen bedeutet,
Y Halogen oder einen Alkylrest mit 1 bis 4 Kohlenstoffatomen bedeutet und
n 0 oder eine Zahl von 1 bis 5 ist.

6. Verfahren gemäß irgendeinem der vorhergehenden Ansprüche, worin das vinylaromatische Monomer in Gegenwart eines Kautschuks polymerisiert wird.

7. Verfahren gemäß irgendeinem der vorhergehenden Ansprüche, worin das vinylaromatische Monomer eines oder mehrere copolymerisierbare Monomere, insbesondere ausgewählt aus Acrylnitril, Methacrylnitril, Methylmethacrylat, Maleinanhydrid und Methacrylsäure, in einer Menge von unter 50 Gew.-% einschließt.

8. Verfahren gemäß irgendeinem der vorhergehenden Ansprüche, worin der Polyphenylenether die allgemeine Formel (III) besitzt 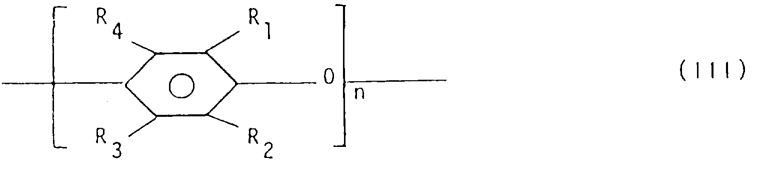 in der R₁, R₂, R₃ und R₄, gleich oder voneinander verschieden, Wasserstoff, 1 bis 10 Kohlenstoffatome enthaltende Alkylreste, insbesondere ausgewählt aus Methyl, Ethyl, Propyl, Butyl und Pentyl, Halogen, insbesondere Chlor und Brom, und Aralkyl-, Alkylaryl- oder Arylreste mit 6 bis 20 Kohlenstoffatomen bedeuten und n wenigstens 50 ist und vorzugsweise im Bereich zwischen 50 und 200 liegt.

## Revendications

1. Procédé de préparation de perles expansibles constituées de mélanges de poly(phénylène éther) et d'un polymère poly(vinyl-aromatique) contenant un agent d'expansion, lequel procédé comporte les étapes consistant à dissoudre un poly(phénylène éther) dans un monomère vinyl-aromatique et à polymériser le monomère vinyl-aromatique en présence de poly(phénylène éther), caractérisé en ce que la polymérisation du monomère vinyl-aromatique est réalisé par :
- prépolymérisation du monomére vinyl-aromatique, en la présence éventuelle d'un amorceur de type peroxyde, pour obtenir un taux de conversion de 10 à 45% en poids de monomère vinyl-aromatique polymérisé ;
- mise de cette masse prépolymérisée en suspension dans de l'eau ;
- addition de l'agent d'expansion ayant un point d'ébullition inférieur à 100° C ; et
- achèvement de la polymérisation dans la suspension aqueuse.

2. Procédé conforme à la revendication 1, dans lequel l'étape de prépolymérisation en masse du monomère vinyl-aromatique est réalisée à une température de 110° C à 130° C.

3. Procédé conforme à l'une quelconque des précédentes revendications, dans lequel la concentration de poly(phénylène éther) dans la solution vaut de 1 à 50% en poids, de préférence de 10 à 40% en poids par rapport à la solution.

4. Procédé conforme à l'une quelconque des précédentes revendications, dans lequel la concentration d'agent d'expansion vaut de 1 à 30% en poids, par rapport à la solution de poly(phénylène éther) et de monomère vinyl-aromatique.

5. Procédé conforme à l'une quelconque des précédentes revendications, dans lequel le monomère vinyl-aromatique a la formule générale (I) : 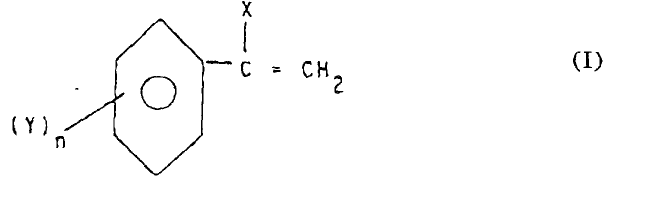 dans laquelle :
X représente un atome d'hydrogène ou un radical alkyle comportant 1 à 4 atomes de carbone ;
Y représente un atome d'halogène ou un radical alkyle comportant 1 à 4 atomes de carbone ; et
n vaut 0 ou un nombre entier de 1 à 5.

6. Procédé conforme à l'une quelconque des précédentes revendications, dans lequel on polymérise le monomère vinyl-aromatique en présence d'un caoutchouc.

7. Procédé conforme à l'une quelconque des précédentes revendications, dans lequel le monomère vinyl-aromatique inclut un ou plusieurs des monomères copolymérisables, en particulier choisis parmi l'acrylonitrile, le méthacrylonitrile, le méthacrylate de méthyle, l'anhydride maléique, et l'acide méthacrylique, en une quantité inférieure à 50% en poids.

8. Procédé conforme à l'une quelconque des précédentes revendications, dans lequel le poly(phénylène éther) a la formule générale (III) : 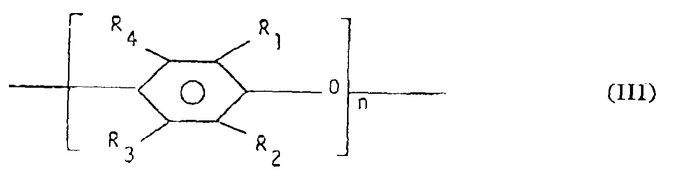 dans laquelle R₁, R₂, R₃ et R₄, identiques ou différents les uns des autres, représentent un atome d'hydrogène, des radicaux alkyle comportant 1 à 10 atomes de carbone, en particulier choisis parmi les radicaux méthyle, éthyle, propyle, butyle et pentyle, un atome d'halogène, en particulier un atome de chlore ou de brome, et des radicaux aralkyle, alkyl-aryle ou aryle comportant 6 à 20 atomes de carbone, et n vaut au moins 50 et de préférence se situe dans l'intervalle allant de 50 à 200.
